# EUROPÄISCHE PATENTSCHRIFT

(11) **EP 1 154 401 B1**
(45) Veröffentlichungstag und Bekanntmachung des Hinweises auf die Patenterteilung: **29.11.2006**
(21) Anmeldenummer: 01111524.3
(22) Anmeldetag: 11.05.2001
(51) Int. Cl.: G09F 15/00, G09F 7/22

(54) **Windkreisel für Werbeträger**
Roundabout for advertising support
Caroussel pour support publicitaire

(30) Priorität: 12.05.2000 DE 20008538 U
(43) Veröffentlichungstag der Anmeldung: 14.11.2001
(73) Patentinhaber: Wöhrle Hartmut, 78132 Hornberg (DE)
(72) Erfinder: Wöhrle Hartmut, 78132 Hornberg (DE)
(74) Vertreter: Patentanwälte Westphal, Mussgnug & Partner

(56) Entgegenhaltungen:
- EP-A- 0 573 112
- DE-A- 19 843 291
- US-A- 4 910 898
- US-A- 5 167 199
- US-A- 5 953 841

## Beschreibung

Die Erfindung betrifft einen Windkreisel für Werbeträger.

Aus dem Stand der Technik ist bekannt, bewegte Objekte als Werbeträger zu verwenden, da bekannterweise bewegte Gegenstände die Aufmerksamkeit von Personen auf sich ziehen. Die Werbewirksamkeit ist demzufolge gegenüber herkömmlichen Plakatwänden und/oder Litfasssäulen erhöht.

Es ist ferner bekannt, für die Bewegung solcher Werbeträger die Windenergie zu nutzen. So ist bekannt, als Werbeträger Fahnen oder Flaggen zu verwenden. Weiterhin ist bekannt, die Rotorblätter eines vorzugsweise um eine vertikale Drehachse rotierenden Windrad als Werbeträger zu verwenden. Beispiele für derartige Werbetrager finden sich in der US 4,910,898 oder der EP 573 112 A1.

In der Regel vollziehen insbesondere letztere eine vorzugsweise langsame und monotone Drehbewegung, welche von daran vorbeigehenden Personen überhaupt nicht wahrgenommen wird.

Der Erfindung liegt somit die Aufgabe zugrunde, einen Windkreisel für Werbeträger vorzustellen, welcher bei hinreichender Windstärke eine nicht monotone Bewegung ausführt und somit die Aufmerksamkeit eines potentiellen Kunden auf sich zu ziehen vermag.

Diese Aufgabe wird erfindungsgemäß gelöst durch einen Windkreisel mit den Merkmalen des Anspruchs 1.

Vorteilhafte Ausführungen und Weiterbildungen der Erfindung sind in den Unteransprüchen angegeben.

Der erfindungsgemäße Windkreisel für Werbeträger weist ein oder mehrere eine Werbebotschaft tragende Segel auf; welche um entsprechende Schwenkachsen um einen vorgegebenen Winkelbereich schwenkbar gehalten sind. Der Winkelbereich ist dabei so gewählt, dass zum Erzeugen einer Vortriebskraft eine selbsttätige Ausrichtung der Segel auf die Windrichtung nach Art eines Segels eines Segelbootes erfolgt. Die Segel sind dabei so gelagert, dass sie infolge der Vortriebskraft auf einer geschlossenen Bahnkurve umlaufend antreibbar sind. Die als Werbeträger dienenden Segel sind also nicht allein windmühlenartig an einem drehbar gelagerten Mast befestigt, sondern die Segelstellung ändert sich während eines Umlaufs nach Art eines Wende- und Halsemanövers wie die Segel eines Segelboots. Durch die der Kreiselbewegung überlagerte Ausrichtung auf die Windrichtung wird die Aufmerksamkeit des Betrachters auf den Werbeträger gesteigert.

Die Bahnkurve der Segel ist eine Kreisbahn. Eine solche Kreisbahn lässt sich sehr einfach dadurch realisieren, dass der Windkreisel einen drehbar gelagerten koaxial zur Drehachse angeordneten Mast aufweist, welcher wiederum eine Haltevorrichtung aufweist an der die Segel radial beabstandet zu der Drehachse angeordnet sind.

Alternativ lässt sich eine Kreisbahn auch dadurch erzeugen, dass anstelle des Masts ein Maststumpf eingesetzt wird, welcher beispielsweise an einem Haltearm drehbar gelagert ist.

Eine besondere Ausgestaltung der Erfindung sieht vor, dass dem Mast oder dem Maststumpf eine Wandbefestigungsvorrichtung zugeordnet wird, mit welcher der Windkreisel beispielsweise an einer Hauswand befestigbar ist. Diese Anordnung unterstreicht die große Zahl an Einsatzmöglichkeiten.

Der Windkreisel kann mit ein, zwei oder mehr Segeln betrieben werden. Der Windkreisel reagiert bei beliebiger Windrichtung, da die Verschwenkbarkeit der Segel eine entsprechende Ausrichtung garantiert. Allein bei der Verwendung eines einzigen Segels muss ein Totpunkt überwunden werden. Bevorzugt sind daher zwei oder mehr Segel zu verwenden, da dann mindestens ein Segel derart zur Windrichtung ausgerichtet ist, dass eine Vortriebskraft erzeugt wird.

Zur Reduzierung parasitärer Kräfte sind die Schwenkachsen der Segel achsparallel zur Drehachse des drehbar gelagerten Masts angeordnet.

Besonders vorteilhafte Ausführungen der Erfindung ergeben sich dadurch, dass die Haltevorrichtungen radial an dem Mast angeordnete Haltearme oder kreisförmige Scheiben sind. Im ersten Fall weisen die Haltearme bevorzugt winklig abstehende Segelhalterungen auf, welche an den Segeln befestigte Schoten halten. Diese Schoten begrenzen den Winkelbereich der Verschwenkbarkeit der Segel um die Schwenkachsen. Die Schoten sind vorzugsweise mit einer Feder- oder Gummizugvorrichtung ausgestattet. Diese gewährleistet einen weichen federnden Übergang bei Wende und Halse. Auch bei plötzlich auftretenden Windböen und bei größeren Windstärken lässt sich damit die mechanische Belastung der Segelhalterungen sowie der Haltevorrichtungen reduzieren.

Eine alternative Ausführungsform wird dadurch realisiert, dass jedem Segel mindestens ein Federstab zugeordnet ist, welcher im Wesentlichen starr zur Segelfläche fixiert ist, wobei den Federstab eine Federstabverankerung derart umfasst, dass der Federstab in seinen beiden Bewegungsrichtungen anschlagbegrenzt ist. Vorzugsweise ist dabei die Federstabverankerung an der Haltevorrichtung fixiert. Die Biegefähigkeit des Federstabs bewirkt, dass bei plötzlich auftretenden Windböen und bei größeren Windstärken die Anschlagsbegrenzung nicht abrupt sondern federnd erfolgt. Auch bei diesem Ausführungsbeispiel wird die mechanische Belastung der gesamten Anordnung reduziert.

Dennoch können bei Sturm oder Orkan so hohe Kräfte auftreten, dass die Segel und/oder der Windkreisel selbst zerstört wird. Aus diesem Grund sieht eine besonders vorteilhafte Ausgestaltung der Erfindung vor, dass beim Überschreiten einer vorgegebenen Windstärke die Verbindung zwischen den Schoten und den Segelhalterungen gelöst wird, so dass die Segel ohne Winddruck frei im Wind drehbar sind. Die Segel wehen dann wie Fahnen am Mast im Wind. Die Auslösung dieser Sturmsicherung erfolgt beispielsweise einstellbar durch Federzug oder mittels eines elektrischen Windmessers.

Bei der alternativen Ausführungsform mit Federstab und Federstabverankerung sind die Biegesteifigkeit und die Länge des Federstabs so auf die Federstabverankerung abgestimmt, dass beim Überschreiten einer vorgegebenen Windstärke der Federstab so stark verbogen wird, dass die Federstabverankerung den Federstab freigibt und der Federstab in seinen beiden Bewegungsrichtungen nicht mehr anschlagbegrenzt ist und dadurch das Segel frei drehbar ist.

Bei starkem Orkan ist eine freie Beweglichkeit der Segel unter Umständen nicht ausreichend, um eine Zerstörung des Windkreisels und/oder der Segel zu vermeiden. Aus diesem Grund sieht die Erfindung eine rolladenartige Einrollvorrichtung vor, so dass die Segel rolladenartig einrollbar sind. Das Einrollen des Segel kann beispielsweise manuell erfolgen oder mit Hilfe eines motorischen Antriebs. Für eine hinreichende Stabilität des Windkreisels sind nunmehr allein die entsprechenden statischen Größen wie Verankerung, Materialwahl, Materialstärke etc. zu berücksichtigen.

Vorteilhafterweise ist der Einrollvorrichtung ein Rückstellorgan zugeordnet, so dass das Einrollen der Segel entgegen der Rückstellkraft des Rückstellorgans und das Ausrollen infolge der Rückstellkraft des Rückstellorgans erfolgt. Ein motorischer oder manueller Antrieb ist also nur für das Einrollen der Segel erforderlich. Prinzipiell ist selbstverständlich auch die umgekehrte Anordnung denkbar, wonach das Ausrollen der Segel mit Hilfe eines Antriebs und das Einrollen mit Hilfe eines "passiven" Rückstellorgans erfolgt.

Es ist gemäß der Erfindung vorgesehen, dass die Verbindungen zwischen den Schoten und den Segelhalterungen bei nachlassendem Sturm manuell oder automatisch wieder eingeklinkt werden können.

Die Erfindung sieht weiterhin einen Signalgeber vor, der beim Überschreiten der vorgegebenen Windstärken die Sturm- bzw. Orkansicherungen auslöst bzw. beim Unterschreiten vorgegebener Windstärken Signale zum Einklinken der Segel bzw. zum Ausrollen der Segel gibt.

Erste Modellversuche haben ergeben, dass derartige Windkreisel eine ausreichende Leistungsfähigkeit aufweisen, um bereits bei vergleichsweise geringen Windgeschwindigkeiten einen Kleingenerator antreiben zu können. Die Erfindung sieht vor, dass die dabei erzeugte Energie beispielsweise in einem Akkumulator oder einer Batterie gespeichert wird. Diese Energie kann dann beispielsweise zur Beleuchtung der Anlage selbst bei Nacht verwendet werden. Die elektrische Leistung des Windkreisels hängt von der Anzahl der Segel, der Segelfläche, der Ausrichtung der Schwenkachsen, dem Abstand der Schwenkachsen von der Drehachse (Hebelwirkung) sowie von der Windstärke ab. Weiterhin kann die Drehantriebsleistung durch entsprechende Wahl des Segeltuchs und das Profil der Segel verändert werden.

Neuere Untersuchungen haben gezeigt, dass das Prinzip des Antriebs des Windkreisels mit Hilfe des Mediums Luft auch mit Hilfe des Mediums Wasser möglich ist. An die Stelle des Windes tritt dann die Strömung des Wassers.

Ausführungsbeispiele der Erfindung sind in den Zeichnungen dargestellt und werden im Folgenden näher beschrieben. Es zeigen:
- Fig. 1: eine perspektivische Ansicht eines erfindungsgemäßen Windkreisels mit drei Segeln;
- Fig. 2: eine Draufsicht von oben auf den Windkreisel nach Fig. 1;
- Fig. 3: einen Mast mit elektrischem Generator, der über eine Kupplung und ein Getriebe angetrieben wird;
- Fig. 4: einen Ausschnitt aus Fig. 2 zur Demonstration der Kreiseldrehrichtung bei vorgegebener Windrichtung
- Wind von der Seite (angegeben ist die Windrichtung in Bezug auf die Segelhalterung) ;
- Fig. 5: Ausschnitt gemäß Fig. 4
- Wind schräg von hinten;
- Fig. 6: Ausschnitt gemäß Fig. 4
- Wind von hinten (Halse);
- Fig. 7: Ausschnitt nach Fig. 4
- Wind von der Seite;
- Fig. 8: Ausschnitt nach Fig. 4
- Wind schräg von vorn;
- Fig. 9: Ausschnitt nach Fig. 4
- Wind von vorn (Wende);
- Fig. 10: Ausschnitt nach Fig. 4
- Wind schräg von vorn;
- Fig. 11: eine perspektivische Ansicht eines Windkreisels mit einem Segel;
- Fig. 12: eine Draufsicht von oben auf den Windkreisel nach Fig. 11;
- Fig. 13: eine Seitenansicht eines Segels mit Einrollvorrichtung;
- Fig. 14: eine perspektivische Darstellung einer weiteren Ausführungsform eines Windkreisels mit drei Segeln;
- Fig. 15: eine Draufsicht von oben auf den Windkreisel nach Fig. 14;
- Fig. 16: eine Draufsicht von oben auf eine Ausführungsform eines Windkreisels, die nicht Gegenstand der Erfindung ist;
- Fig. 17: eine Draufsicht von oben auf eine weitere Ausführungsform eines Windkreisels, die nicht Gegenstand der Erfindung ist;
- Fig. 18: eine Seitenansicht der Windkreisel nach Fig. 16 oder 17.
- Fig. 19: eine perspektive Ansicht eines weiteren Ausführungsbeispiels eines erfindungsgemäßen Windkreisels mit drei Segeln.
- Fig. 20: eine Detailansicht einer erfindungsgemäßen (Segel-) Einrollvorrichtung
- Fig. 21: eine Detailansicht eines erfindungsgemäßen Windkreisels mit Sturmsicherung mittels eines Federstabs
- Fig. 22: eine Schnittdarstellung längs A'-A" des erfindungsgemäßen Windkreisels nach Fig. 21
- Segel im Betriebszustand -
- Fig. 23: eine Schnittdarstellung längs A'-A'' des erfindungsgemäßen Windkreisels nach Fig. 21
- Einbringen des Segels aus dem frei verschwenkbaren
Zustand in den Betriebszustand -
- Fig. 24: eine Detailansicht des Windkreisels nach Fig. 21
- Haltearmausrichtung in östlicher Richtung, Wind aus westlicher Richtung -
- Fig. 25: eine Detailansicht des Windkreisels nach Fig. 21
- Haltearmausrichtung in östlicher Richtung, Wind aus östlicher Richtung -
- Fig. 26: eine Detailansicht des Windkreisels nach Fig. 21
- Haltearmausrichtung in östlicher Richtung, Wind aus nördlicher Richtung -
- Fig. 27: eine Detailansicht des Windkreisels nach Fig. 21
- Haltearmausrichtung in östlicher Richtung, Sturm aus westlicher Richtung -
- Fig. 28: eine Seitenansicht eines weiteren erfindungsgemäßen Windkreisels
- Fig. 29: eine Seitenansicht von rechts auf den erfindungs gemäßen Windkreisel nach Fig. 28
- Fig. 30: eine Draufsicht von oben auf den erfindungsgemäßen Windkreisel nach Fig. 28
- Segelstellung rechts -
- Fig. 31: eine Draufsicht von oben auf den erfindungsgemäßen Windkreisel nach Fig. 28
- Segelstellung links -

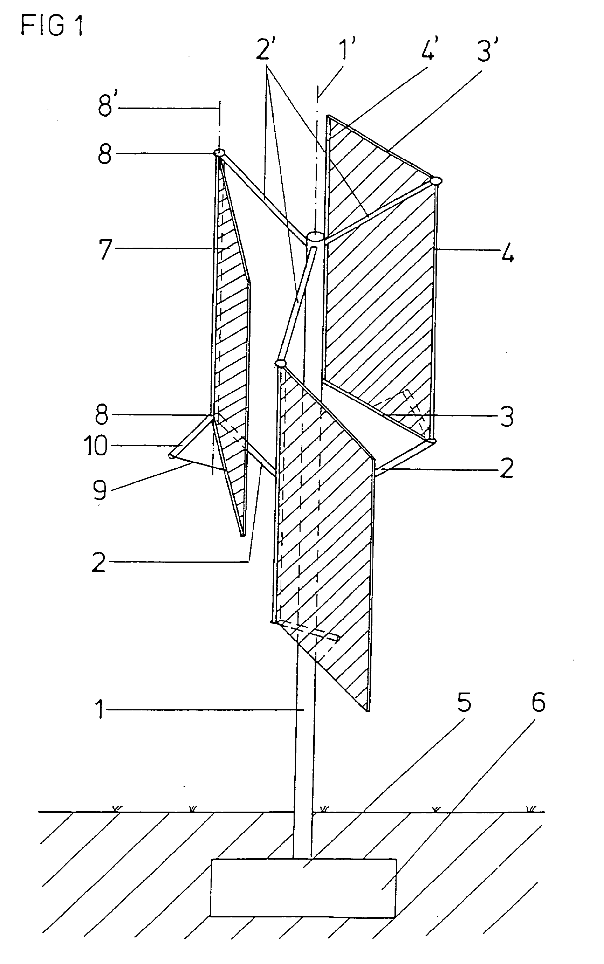

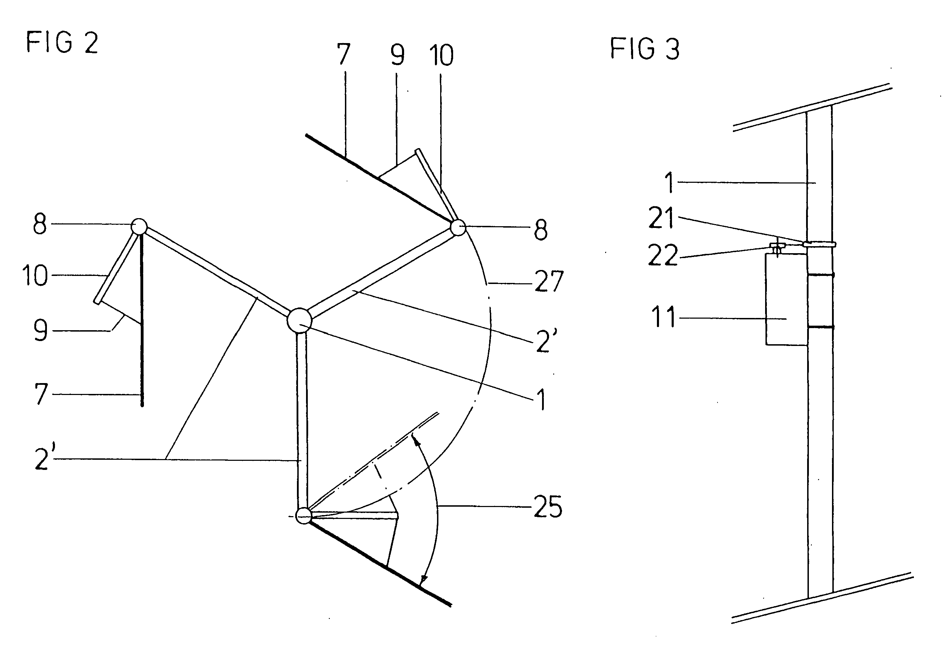

Fig. 1 zeigt in perspektivischer Darstellung eine erste Ausführungsform eines erfindungsgemäßen Windkreisels, Fig. 2 eine entsprechende Draufsicht. Der in den Fig. 1 und 2 dargestellte Windkreisel weist einen Mast 1 auf, welcher mit Hilfe einer in einem Mastfuß 6 angeordneten Mastlagerung 5 drehbar um eine Drehachse 1' gelagert ist. Im Beispiel ist der Mast 1 in vertikaler Richtung angeordnet. Der Mast 1 weist im Beispiel sechs radial angeordnete Haltearme 2, 2' auf. Jeweils drei dieser Haltearme 2, 2' sind dabei in einer Ebene angeordnet, wobei der Mast 1 jeweils eine Flächennormale bildet. Die jeweiligen in einer Ebene liegenden Haltearme 2. 2' schließen dabei jeweils einen Winkel von 120° ein. Jeweils zwei in unterschiedlichen Ebenen liegende Haltearme 2, 2' sind in vertikaler Richtung übereinander angeordnet.

Sowohl die oberen Haltearme 2' als auch die unteren Haltearme 2 weisen im Beispiel identische Längen auf. An den Enden dieser oberen und unteren Haltearme 2, 2' befindet sich jeweils eine Segellagerung 8. An zwei Segellagerungen 8 zweier übereinander angeordneter Haltearme 2, 2' ist jeweils ein rechteckförmiges Segel 7 drehbar gelagert. Diese drehbare Lagerung bildet eine achsparallel zur Drehachse 1' des Mastes 1 ausgerichtete Schwenkachse 8'. Im Beispiel fällt diese Schwenkachse 8' mit einer Seitenkante des rechteckförmigen Segels 7 zusammen. Das Segel 7 selbst kann, wie im Beispiel, aus einem einen Rahmen bildenden Gestänge mit beweglich gelagerten horizontal ausgerichteten Stangen 3, 3' und vertikal angeordneten Stangen 4, 4' gebildet werden. Dieser Rahmen spannt beispielsweise ein Segeltuch.

Dieses Segel 7 ist erfindungsgemäß dazu vorgesehen, als Werbeträger zu dienen.

Die Verschwenkbarkeit des Segels 7 um die Schwenkachse 8', welche durch die Segellagerungen 8 und die darin gelagerten Stangen 3, 3' gebildet wird, wird auf einen vorgegebenen Winkelbereich 5 begrenzt. Zu diesem Zweck ist an den unteren Haltearmen 2 jeweils eine stabförmige Segelhalterung 10 angebracht, welche im Beispiel in horizontaler Richtung rechtwinklig von dem äußeren Ende eines jeden Haltearms 2 absteht. An dem abstehenden Ende der stabförmigen Segelhalterung 10 ist eine Schot 9 befestigt, welche in dem verschwenkbaren Bereich des Segels 7 befestigt ist. Im Beispiel befindet sich die Segelbefestigung in der Mitte einer beweglich gelagerten unteren Stange 3.

In Gegenwart von Wind dreht sich die gesamte Anordnung um die drehbar gelagerte Drehachse 1' des Masts 1. Dabei erfolgt eine selbsttätige Ausrichtung der Segel 7 auf die jeweilige Windrichtung nach Art eines Segels eines Segelboots. Die Schwenkachsen 8' der Segel 7 umlaufen dabei einen gemeinsamen zur Drehachse 1' koaxiale kreisförmige Bahnkurve 27. Während eines Umlaufs ändert sich dabei die Segelstellung nach Art eines Wende- und Halsemanövers. Durch die Kreiselbewegung in Verbindung mit dem Umschlagen der Segel nach Art eines Wende- und Halsemanövers wird die Aufmerksamkeit eines Betrachters auf die als Werbeträger dienenden Segel 7 gelenkt.

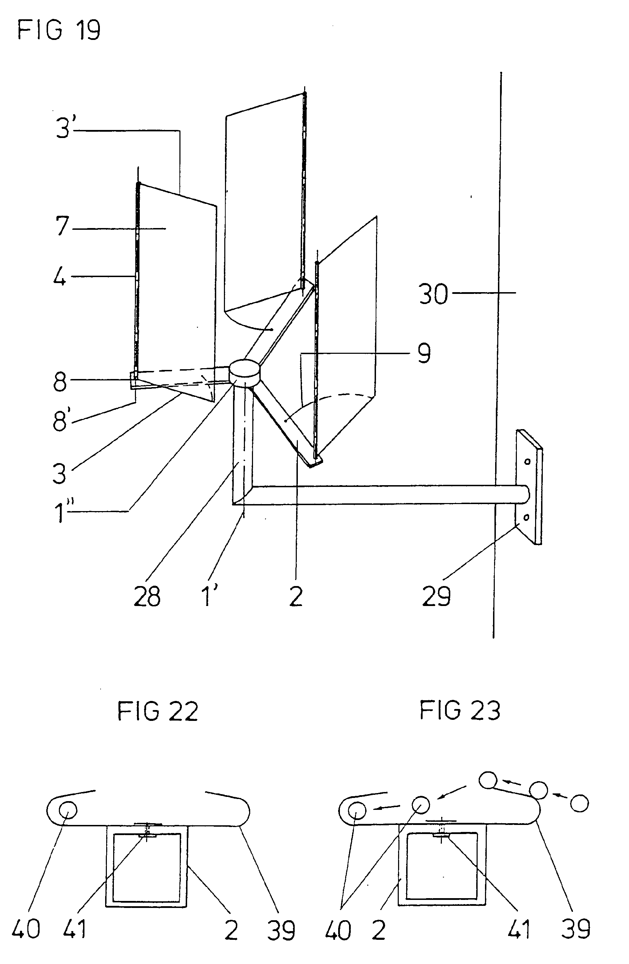

Der in der Figur 19 dargestellt Windkreisel weist einen Haltearm 28 in Form eines rechtwinklig gebogenen Rohres auf. Ein Schenkel des rechtwinklig gebogenen Rohres ist in horizontaler Richtung angeordnet, der andere Schenkel in vertikaler Richtung, wobei das eine Ende des in vertikaler Richtung angeordneten Rohres nach oben weist. Das horizonal ausgerichtete Rohrende mündet in eine Wandbefestigungsvorrichtung 29. Die Wandbefestigungsvorrichtung 29 ist im Beispiel als ebene Platte ausgebildet, an der das Rohrende angeschweisst ist. Die Rohrachse steht dabei im Wesentlichen senkrecht auf der als Platte ausgebildeten Wandbefestigungsvorrichtung 29. Die Wandbefestigungsvorrichtung 29 weist Bohrungen auf, so dass diese beispielsweise mit Hilfe von Schrauben und Dübeln an einer Wand 30 befestigt werden kann.

Das andere Ende des Haltearms 28 nimmt einen drehbar gelagerten Maststumpf 1" auf. In dem Beispiel nach Fig. 19 ist die drehbare Lagerung des Maststumpfes 1" um eine Drehachse 1' wie in dem Beispiel nach Fig. 1 in vertikaler Richtung ausgebildet. Der Maststumpf 1" weist im Beispiel 3 radial angeordnete Haltearme 2 auf. Diese Haltearme 2 sind in einer horizontalen Ebene abgeordnet. Jeweils zwei Haltearme 2 schließen einen Winkel von 120° ein. An den Enden dieser Haltearme 2 befindet sich jeweils eine Segellagerung 8. In einer solchen Segellagerung 8 ist jeweils ein rechteckförmiges Segel 7 drehbar gelagert. Diese drehbare Lagerung bildet eine parallel zur Drehachse 1' des Maststumpfes 1" ausgerichtete Schwenkachse 8'. Wie in dem in Fig. 1 dargestellten Beispiel fällt diese Schwenkachse 8' mit einer Seitenkante des rechteckförmigen Segels 7 zusammen. Das Segel 7 selbst besteht im Beispiel aus einem einen U-förmigen Rahmen bildenden Gestänge mit beweglich gelagerten horizontal ausgerichteten Stangen 3, 3' und einer Stange 4, durch welche die Schwenkachse 8' verläuft.

Die Verschwenkbarkeit des Segels 7 um die Schwenkachse 8' wird wiederum mit Hilfe einer Schot 9 begrenzt, welche allerdings nicht wie in Fig. 1 dargestellt an einem in horizontaler Richtung rechtwinklig von dem äusseren Ende eines jeden Haltearms 2 absteht, sondern die Schot 9 ist direkt im Mittelbereich des Haltearms 2 befestigt. Das andere Ende der Schot 9 ist an dem äusseren Ende der beweglich gelagerten Stange 3 befestigt.

Wie bei einer Anordnung gemäß Fig. 1 und Fig. 2 dreht sich in Gegenwart von Wind die gesamte Anordnung um die drehbar gelagerte Drehachse 1' des Maststumpfes 1'', wobei eine selbst tätige Ausrichtung der Segel 7 auf die jeweilige Windrichtung nach Art eines Segels eines Segelbootes erfolgt.

Zusätzlich haben erste Modellversuche ergeben, dass derartige Windkreisel eine ausreichende Leistungsfähigkeit aufweisen, um bereits bei vergleichsweise geringen Windgeschwindigkeiten einen Kleingenerator antreiben zu können, der beispielsweise eine Beleuchtung der Werbeträger bei Nacht ermöglicht. Eine derartige besonders vorteilhafte Ausgestaltung der Erfindung ist der Fig. 3 zu entnehmen. So kann sich beispielsweise in dem Mastfuß 6 ein solcher elektrischer Generator 11 befinden welcher die Drehbewegung des Masts 1 über eine entsprechende Kupplung 21 und ein Getriebe 22 in elektrische Energie wandelt. Diese elektrische Energie kann beispielsweise in einem Akkumulator oder in einer Batterie gespeichert werden. Selbst eine Netzeinspeisung ist möglich. Neben der Beleuchtung der Anlage bei Nacht ist in diesen Fällen sogar ein motorischer Antrieb des Kreisels selbst möglich.

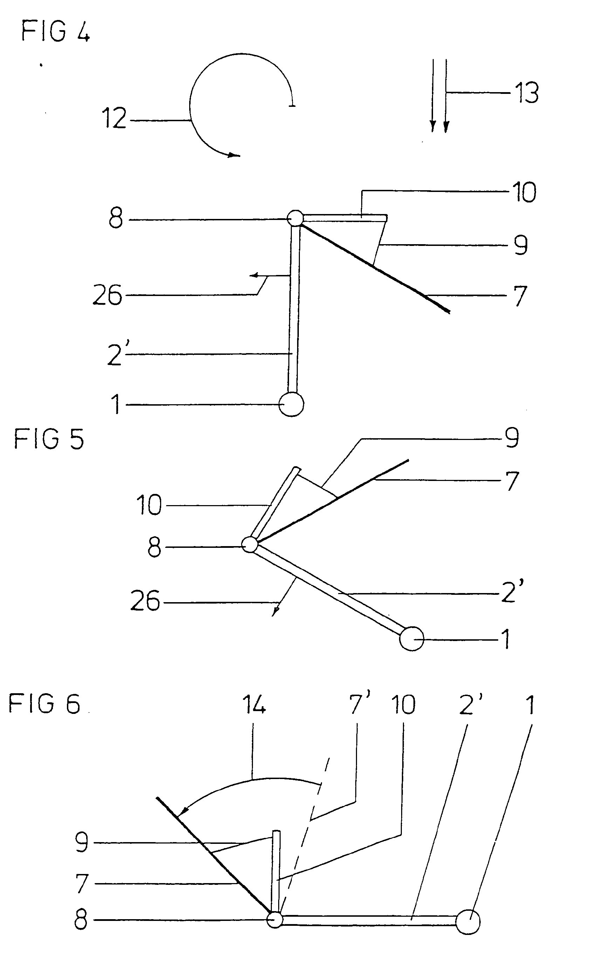

Die Fig. 4 bis 10 demonstrieren die Funktionsweise des Windkreisels und insbesondere die Ausrichtung der Segel 7 und die erzeugte Vortriebskraft 26 in Abhängigkeit von der Windrichtung 13. Zu diesem Zweck beschränken sich die Fig. 4 bis 10 auf die Darstellung eines Windkreisels mit einem einzigen Segel 7. Bei den Darstellungen der Segelstellung ist dabei stets davon auszugehen, dass der Wind - wie beispielhaft in der Fig. 4 dargestellt - aus nördlicher Richtung 13 weht.

Die Fig. 4 zeigt eine Draufsicht auf einen solchen Windkreisel, bei dem die Haltearme 2, 2' in nördlicher Richtung ausgerichtet sind. Die an dem hinteren Ende der Haltearme 2, 2' angeordnete Segelhalterung 10 weist in östliche Richtung. Das Segel 7 selbst weist von der Segellagerung 8 aus in südöstliche Richtung. Ein Wind aus nördlicher Richtung 13, welcher auf das Segel trifft, hat zur Folge, dass der Druck auf der dem Wind zugewandten Segelseite größer ist als auf dessen Rückseite. Diese Druckkraft führt zu einer Vortriebskraft 26 in östlicher Richtung und zu einer Drehbewegung 12 des Windkreisels entgegen dem Uhrzeigersinn.

In Fig. 5 ist das Segel 7 in nord-östlicher Richtung ausgerichtet. Wiederum ist der Druck auf der Seite des Segels 7 größer, welche der Windrichtung 13 zugewandt ist. Die dadurch entstehende Vortriebskraft 26 wirkt im Wesentlichen in südlicher Richtung, so dass wiederum eine Drehantriebsbewegung 12 des Windkreisels entgegen dem Uhrzeigersinn erfolgt.

Bei einer Segelausrichtung 7' in im Wesentlichen nördlicher Richtung, wie in Fig. 6 dargestellt ist, sind beide Segelflächen annähernd identischen Druckverhältnissen ausgesetzt. Infolge der Drehbewegung 12 des Windkreisels entgegen dem Uhrzeigersinn auf das Segel 7 wirkende Fliehkraft führt zu einem plötzlichen Umschlagen des Segels 7 in der Art eines Halsemanövers bei einem Segelboot. Der Deutlichkeit halber ist das Umschlagen des Segels bei einer Halse durch einen Pfeil mit der Bezugsziffer 14 gekennzeichnet. Während dieser Halse 14 wirkt keine Vortriebskraft. Es erfolgt daher auch kein Drehantrieb des Windkreisels.

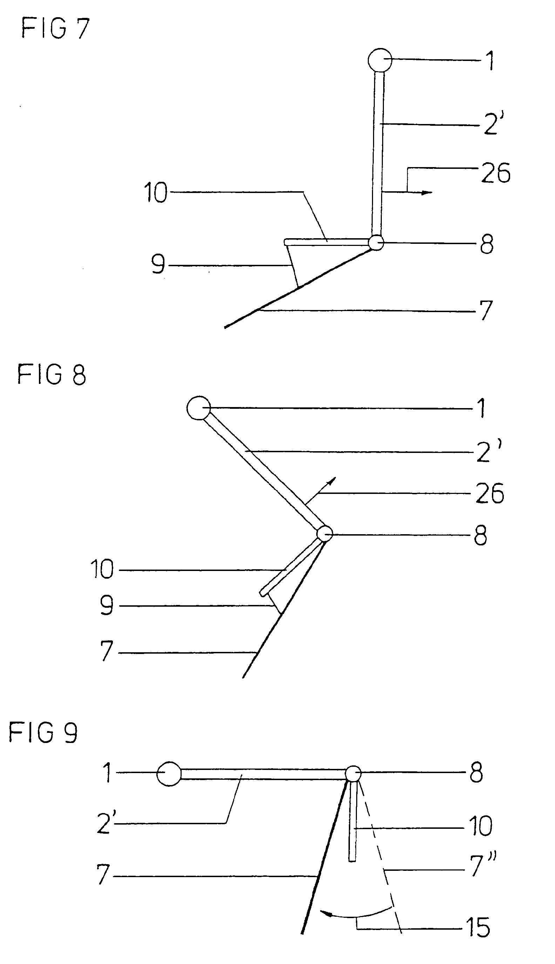

Die Darstellung gemäß Fig. 7 zeigt eine Ausrichtung der Haltearme 2, 2' in südlicher Richtung und eine Segelstellung in südwestlicher Richtung. Die aufgrund der Windrichtung 13 erzeugten Druckverhältnisse führen zu einer Vortriebskraft 26 in östlicher Richtung. Diese Vortriebskraft 26 erzeugt wiederum über den Haltearm 2' als Hebelarm einen Drehantrieb 12 entgegen dem Uhrzeigersinn. Weitgehend identische (Vortriebs-) Kraft und Bewegungsverhältnisse ergeben sich bei einer Ausrichtung der Haltearme 2, 2' in südöstlicher Richtung wie in Fig. 8 dargestellt ist.

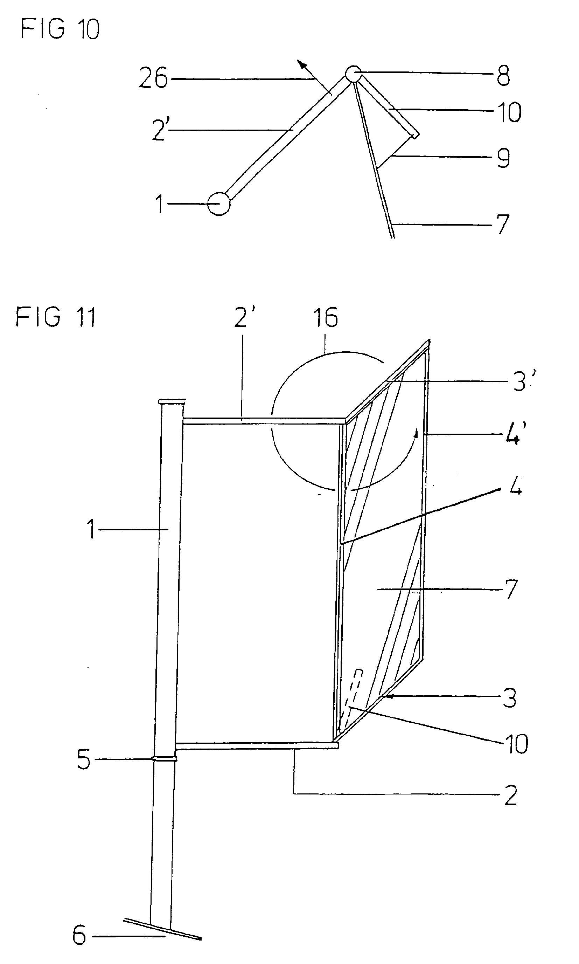

Bei einer Ausrichtung des Haltearms 2' in östlicher Richtung (vgl. Fig. 9) erfolgt wiederum ein Umschlagen des Segels 7 aus der Segelstellung 7" in die mit dem Bezugszeichen 7 versehene Segelstellung. Dieses Umschlagen des Segels 7 entspricht einem Wendemanöver bei einem Segelboot. Die Umschlagerichtung bei der Wende ist in dem Beispiel mit dem Bezugszeichen 15 gekennzeichnet. Eine Vortriebskraft wirkt dabei nicht. Daher erfolgt auch kein Drehantrieb.

In der Fig. 10 ist die Ausrichtung des Haltearms 2 in nord-östlicher Richtung und die Ausrichtung des Segels 7 in südöstlicher Richtung. Die durch die Windrichtung 13 erzeugten Druckverhältnisse an den Segeloberflächen führen zu einer Vortriebskraft 26 in im Wesentlichen östlicher Richtung und somit zu einem Drehantrieb 12 entgegen dem Uhrzeigersinn.

Die Schot 9 ist vorzugsweise mit einer Feder- oder Gummizugvorrichtung ausgestattet. Diese gewährleistet einen weichen federnden Übergang bei einer Wende (Fig. 9) und einer Halse (Fig. 6). Zusammenfassend ist also festzustellen, dass in den in den Fig. 4, 5, 7 und 8 dargestellten Ausrichtungen der Segel 7 zum Wind ein Drehantrieb 26 erfolgt, während bei einer Wende oder Halse (Fig. 6 und Fig. 9) kein Drehantrieb erfolgt. Weist ein solcher Windkreisel also nur ein Segel 7 auf, so müssen die Totpunkte in den in Fig. 6 und 9 dargestellten Stellungen durch die Schwungmasse des Windkreisels selbst überwunden werden. Bei leichtem Wind ist es möglich, dass diese Schwungmasse nicht ausreicht und der Kreisel stehenbleibt. Erst bei einem Wechsel der Windrichtung oder durch entsprechende äußere mechanische Kräfte kann eine Drehbewegung 12 des Windkreisels eingeleitet werden. Aus diesem Grund ist es vorteilhaft, zwei oder mehr Segel 7 in entsprechender Weise an dem Mast 1 anzuordnen. Auf diese Weise ist gewährleistet, dass mindestens ein Segel 7 so zum Wind ausgerichtet ist, dass sich der Windkreisel schon bei leichtem Wind dreht.

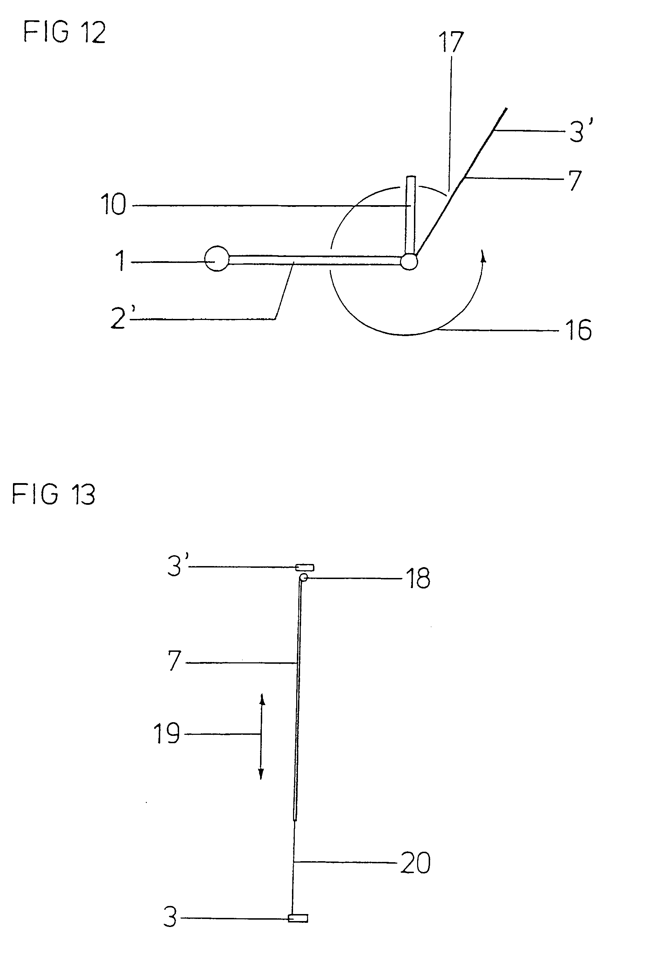

Bei Sturm und Orkan ist es möglich, dass so hohe Kräfte auftreten, dass die Segel 7 oder die mechanische Konstruktion des Windkreisels zerstört werden kann. Aus diesem Grund sieht die Erfindung vor, dass ein entsprechender Sicherungsmechanismus in Gang gesetzt wird. Die Funktionsweise eines solchen Sturm- bzw. Orkansicherungsmechanismus ist den Fig. 11 und 12 zu entnehmen. Beim Überschreiten einer vorgegebenen Windstärke ist vorgesehen, dass die Schot 9, welche eine Verbindung zwischen dem Segel 7 und der Segelhalterung 10 darstellt gelöst wird. Auf diese Weise kann sich das Segel 7 ohne Winddruck frei im Wind drehen. Die Verschwenkbarkeit des Segels 7 ist in den Fig. 11 und 12 mit Hilfe eines mit dem Bezugszeichen 16 versehenen Pfeils gekennzeichnet. Die Erfindung sieht vor, dass die Auslösung dieser Sturm- bzw. Orkansicherung mit Hilfe eines Federzugs oder eines elektrischen Signalgebers erfolgt, welcher an einen elektrischen Windmesser angeschlossen ist.

Bei großen Windstärken ist es in der Regel nicht ausreichend, dass die Segel 7 frei drehbar gehalten werden. In einem solchen Fall ist es vorteilhaft, wenn die Segelflächen nicht mehr dem Wind ausgesetzt sind. Aus diesem Grund sieht die Erfindung vor, dass der Windkreisel für die Segel 7 rolladenartige Einrollvorrichtungen 18 aufweist Wie eine solche rolladenartige Einrollvorrichtung 18 beispielhaft aufgebaut sein kann, ist der Fig. 13 zu entnehmen. Die Fig. 13 zeigt den Segelrahmen von der Seite im Schnitt. Die rolladenartige Einrollvorrichtung 18 ist im Beispiel an einer oberen beweglichen Stange 3' befestigt. Zwischen der oberen Stange 3' und der unteren Stange 3 sind in vertikaler Richtung ein oder mehrere Führungsdrähte 20 gespannt, welche das Segel 7 in horizontaler Richtung straff halten. Im Beispiel erfolgt das Ein- und Ausrollen des Segels, wie mit dem durch das Bezugszeichen 19 versehenen Doppelpfeil gekennzeichnet ist, in vertikaler Richtung.

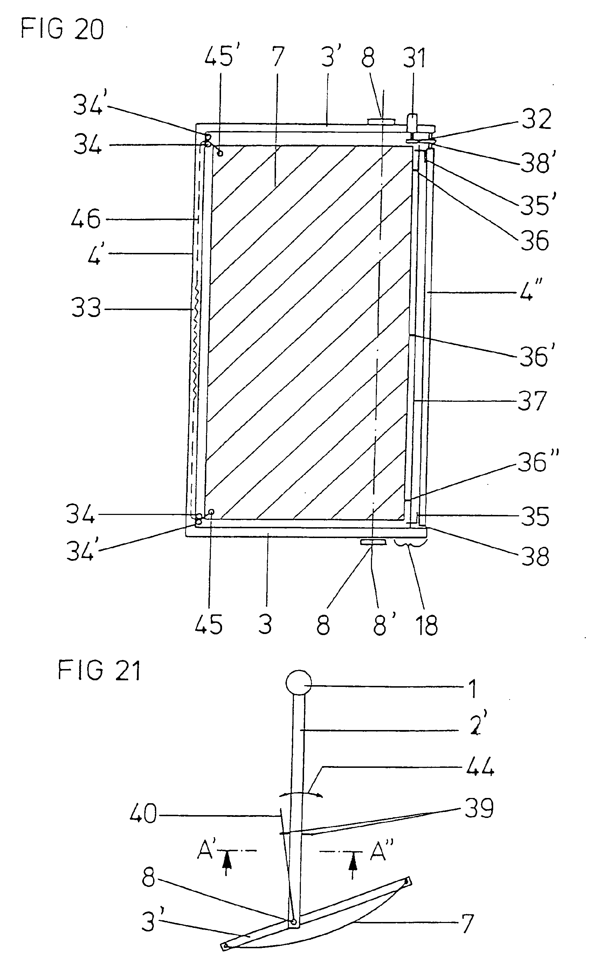

Die Fig. 20 zeigt eine Detailansicht einer weiteren Ausführungsform einer erfindungsgemäßen (Segel-)einrollvorrichtung. deren Funktionsweise anhand der Zeichnung erläutert wird. In dem Beispiel ist das Segel 7 wie in dem vorigen Beispiel rechteckförmig ausgebildet. Das Segel(tuch) 7 wird von einem rechteckförmigen Rahmen gehalten. Dieser rechteckförmige Rahmen wird durch eine horizontal angeordnete untere Stange 3, eine horizontal angeordnete obere Stange 3', eine jeweils ein Ende der oberen Stange 3' und der unteren Stange 3 verbindende Stange 4' und die jeweiligen anderen Enden der oberen und unteren Stangen 3 und 3' verbindenden Stange 4" gebildet. Die oberen und unteren Stangen 3' und 3" weisen aussermittig jeweils eine Segellagerung 8 auf, um das Segel 7 um die durch die Segellagerung 8 verlaufende Schwenkachse 8' verschwenkbar zu halten. An der oberen Stange 3' ist ein motorischer Antrieb 31 angeordnet. Dieser motorische Antrieb 31 ist so angeordnet, dass über einen Zahnriemen- oder Zahnradantrieb 32 die Stange 4", welche an der oberen und unteren Stange 3' und 3 über eine obere und untere Lagerung 38' und 38 drehbar gelagert ist, in eine Rotationsbewegung versetzt wird. Das Segel(tuch) 7 wird durch die Rotationsbewegung der Stange 4" um die Stange 4" aufgerollt. Zu diesem Zweck ist eine Längsseite des Segels 7 mit Hilfe von Haken 36, 36', 36" an einem in vertikaler Richtung gespannten Stahldraht 37 befestigt. Die Spannung des Stahldrahts 37 erfolgt über zwei an den äusseren Enden der Stange 4" angebrachten Winkelstücke 35 und 35'. Der motorische Antrieb 31, der Zahnriemen- oder Zahnradantrieb 32. die drehbar gelagerte Stange 4'' und die Befestigungsmittel 35, 35', 36, 36', 36'' für das Segel 7 bilden die mit dem Bezugszeichen 18 versehene Einrollvorrichtung.

Das Aufspannen des Segels 7 wird dadurch bewerkstelligt, dass die der Einrollvorrichtung 18 abgewandten Ecken des Segels 7 Ösen 45 und 45' aufweist, an denen ein Draht 46 oder ähnliches befestigbar ist. Der an der oberen Öse 45 befestigte Draht 46 wird über zwei an oberen in der Stange 4' angeordnete Rollen 34 und 34' in vertikaler Richtung nach unten geführt. An dem nach unten geführten Ende des Drahts 46' befindet sich ein Ende eines Feder- oder Gummizugs 33. Das andere Ende des Feder- oder Gummizugs 33 ist mit dem Draht 46 verbunden, welcher analog zu dem Draht 46' über zwei an dem anderen Ende der Stange 4' angeordnete Rollen 34'' und 34''' geführt wird und dessen Ende das Segel 7 an der Öse 45 festhält.

Das Einrollen des Segels 7 erfolgt also gegen die Rückstellkraft des Feder- oder Gummizugs 33, während das Ausrollen des Segels 7 selbsttätig infolge der Rückstellkraft des Feder- oder Gummizugs 33 erfolgt. Ein motorischer (oder manueller) Antrieb ist also nur für das Einrollen des Segels 7 erforderlich. In analoger Weise ist auch eine Anordnung denkbar, bei der das Einrollen des Segels 7 mit Hilfe der Federkraft einer Spiralfeder erfolgt, während das Ausrollen des Segels 7 mit Hilfe eines motorischen oder manuellen Antriebs bewerkstelligt wird.

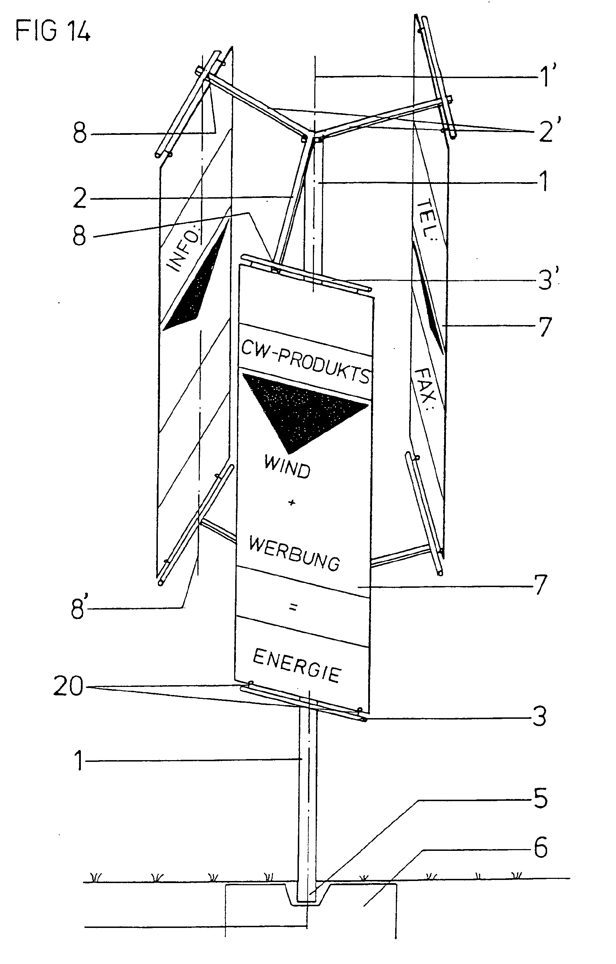

Fig. 14 zeigt ein weiteres Ausführungsbeispiel der Erfindung in perspektivischer Ansicht. Der Aufbau dieser Ausführungsform entspricht in den wesentlichen Merkmalen dem Aufbau des Ausführungsbeispiels gemäß der Fig. 1, wobei in der Fig. 14 die entsprechenden Bauteile mit den bereits in der Fig. 1 verwendeten Bezugszeichen gekennzeichnet sind.

Die in der Fig. 14 dargestellte Ausführungsform der Erfindung unterscheidet sich von der in der Fig. 1 dargestellten dadurch, dass die Schwenkachse 8' nicht mehr entlang einer Kante eines rechteckförmigen Segels 7 verläuft sondern versetzt angeordnet ist, und zwar in der Weise, dass die Segel 7 auf beiden Seiten der Schwenkachse 8' eine Windangriffsfläche aufweisen, wobei eine der beiden Seiten eine größere Windangriffsfläche darstellt. Weiterhin wird das Segel 7 nicht mehr durch an deren Umfang angeordneten Stangen 3, 3', 4, 4', welche einen Rahmen bilden gehalten. In dem in der Fig. 14 dargestellten Beispiel erfolgt die Befestigung des Segels 7 mit Hilfe der horizontal an den oberen und unteren Haltearmen 2 bzw. 2' beweglich gelagerten oberen und unteren Stangen 3 und 3', welche analog der Fig. 13 diese Stangen 3. 3' verbindende in vertikaler Richtung verlaufende Führungsdrähte 20 halten.

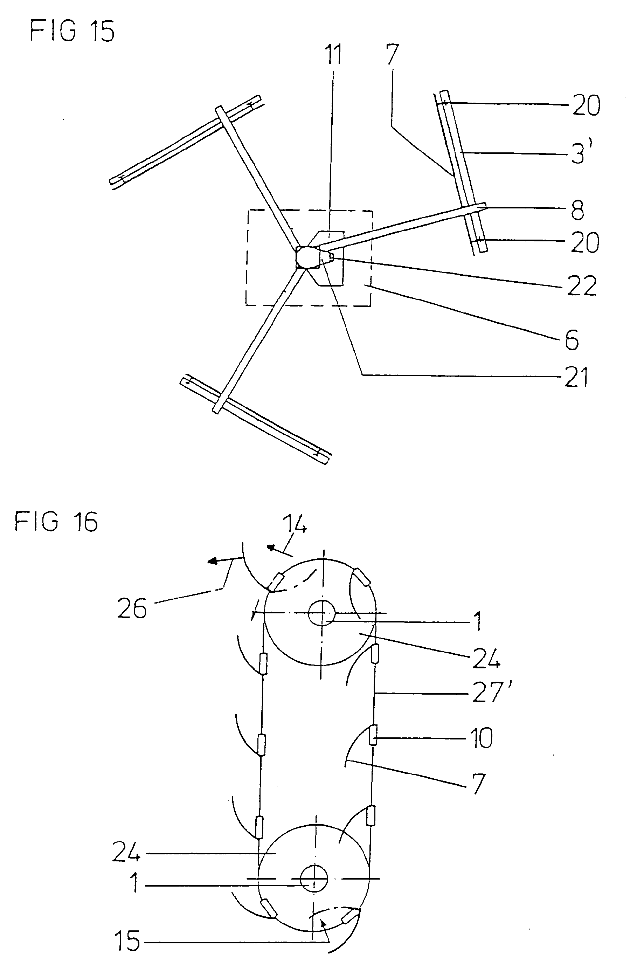

Der Vollständigkeit halber zeigt Fig. 15 die in Fig. 14 dargestellte Anordnung in Draufsicht von oben. Zusätzlich ist der Fig. 15 zu entnehmen, wie ein in dem Mastfuß 6 angeordneter Generator 11 mittels einer Kupplung 21 und einem Getriebe 22 zur Energieerzeugung dient.

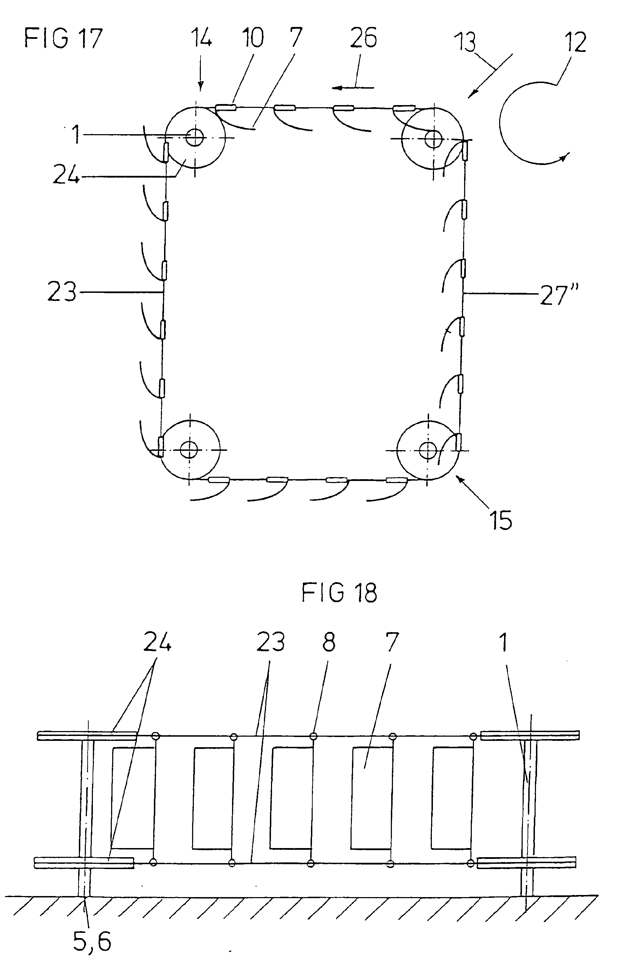

Die Fig. 16 bis 18 demonstrieren, dass das erfindungsgemäße Prinzip nicht allein auf einachsige Anordnungen beschränkt ist. Den Figuren ist zu entnehmen, dass ein solcher Windkreisel auch mit Hilfe parallel zueinander angeordneter Seilzüge 23 aufgebaut werden kann, welche über entsprechende drehbar gelagerte Drehkörper eine riementriebartige Umlaufbewegung beschreiben. Das in der Fig. 16 dargestellte Beispiel weist zwei solcher Drehkörper auf, das in Fig. 17 dargestellte vier, deren Drehachsen die Eckpunkte eines Rechtecks bilden.

Ein solcher Drehkörper besteht beispielsweise wie der Fig. 18 zu entnehmen ist aus einem drehbar gelagerten Mast 1, welcher vertikal angeordnet ist. Dieser Mast 1 weist im Beispiel zwei in unterschiedlicher Höhe angeordnete kreisförmige Scheiben 24 auf, durch deren Mittelpunkte der Mast 1 die Drehachse bildend verläuft. An dem äußeren Umfang dieser kreisförmigen Scheiben 24 werden Seilzüge 23 geführt. Diese Seilzüge 23 bilden eine Haltevorrichtung für die Schwenkachsen 8' der Segel 7. An den Seilzügen 23 sind in jeweils vertikal übereinanderliegender Position Segellagerungen 8 angeordnet, welche denen der in Fig. 1 bis 15 dargestellten entsprechen. An diesen Segellagerungen 8 sind in entsprechender Weise die Segel 7 angebracht. Die Schwenkachsen 8' der Segel 17 bewegen sich infolge der Vortriebskraft 26 auf den geschlossenen Bahnkurven 27' bzw. 27''. Man beachte, dass die gesamte Konstruktion nicht allein auf die in Fig. 18 dargestellte vertikale Anordnung der Masten 1 beschänkt ist. Prinzipiell ist jede beliebige Ausrichtung der Masten 1 möglich.

Der Vollständigkeit halber zeigen die Fig. 16 und 17 die Ausrichtung der Segel 7 zur Windrichtung 13 entsprechend den Erläuterungen zu den Fig. 4 bis 10. Im Beispiel erfolgt die Umlaufbewegung der Schwenkachsen 8' der Segel 7 auf den Bahnkurven 27' und 27'' wiederum entgegen dem Uhrzeigersinn (angedeutet durch das Bezugszeichen 12).

Die Fig. 21 bis 27 demonstrieren die Funktionsweise eines Windkreisels, bei dem der verschwenkbare Winkelbereich 25 mit Hilfe eines im Wesentlichen starr zur Segelfläche fixierten Federstabes und einer an der Haltevorrichtung angebrachten Federstabverankerung realisiert ist. Weiterhin ist diesen Figuren zu entnehmen, wie eine auf diesem System basierende Sturmsicherung funktioniert.

Die Fig. 21 zeigt eine Detailansicht eines erfindungsgemäßen Windkreisels mit Sturmsicherung mittels eines Federstabes. In der Figur ist eine Ausführungsform des Windkreisels dargestellt, welche der in der Fig. 14 dargestellten Ausführungsform ähnelt. Die Hauptbestandteile des Windkreisels sind wiederum ein Mast 1 und ein radial an dem Mast angeordneter Haltearm 2. Die Schwenkachse 8' verläuft so, wie bereits in der Fig. 14 dargestellt, dass das Segel 7 auf beiden Seiten der Schwenkachse 8' eine Windangriffsfläche aufweist, wobei eine der beiden Seiten eine größere Windangriffsfläche darstellt als die andere. Das Segel 7 wird im Beispiel mit einem nicht näher zu erläuternden Haltemechanismus gehalten, der dem in der Fig. 20 vorgestellten ähnelt. Wesentlicher Bestandteil ist wiederum der rechteckförmige Rahmen, bestehend aus oberer und unterer Stange 3' und 3", welche an der Segellagerung 8 beweglich gelagert sind und die vertikal verlaufenden Stangen 4' und 4''. Im Beispiel ist an der unteren beweglich gelagerten Stange 3 im Bereich der Segellagerung 8 ein vorzugsweise rechtwinklig abstehender Federstab 40 fixiert. An dem Haltearm 2 ist eine Federstabverankerung 39 angeordnet, welche im Breispiel als Blechstreifen ausgebildet ist, dessen äussere Enden U-förmig nach innen gebogen sind. Die Federstabverankerung 39 ist dabei derart an dem Haltearm 2 befestigt, dass der an der unteren Stange 3 winklig fixierte Federstab 40 mit dessen abstehendem Ende in die U-förmigen Enden der Federstabverankerung 39 bringbar ist. Auf diese Weise wird der Federstab 40, wie in der Fig. 21 dargestellt ist, in seinen Bewegungsrichtungen 44 anschlagbegrenzt.

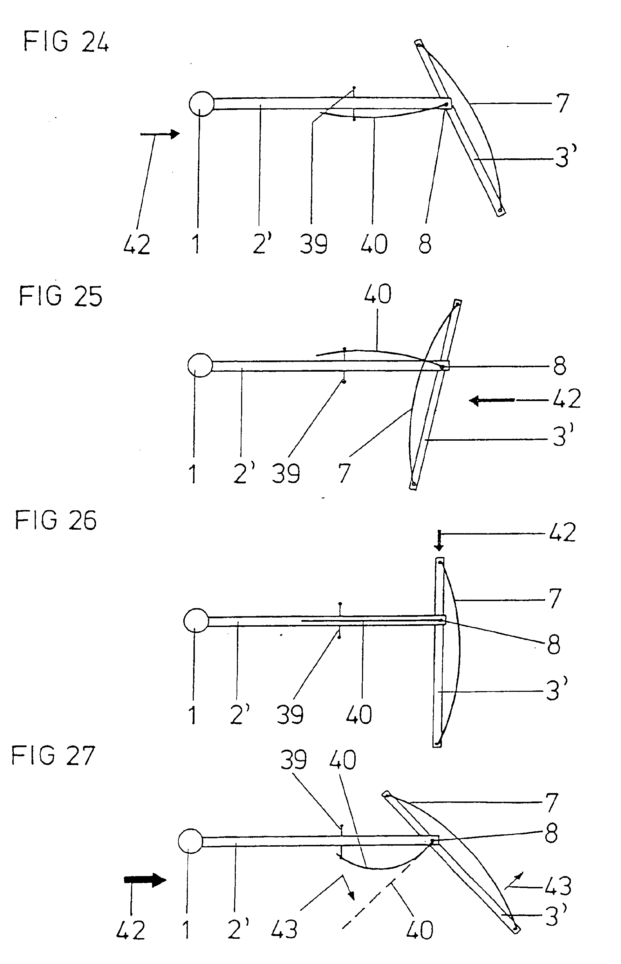

Zur Verdeutlichung zeigt Fig. 22 eine Schnittdarstellung längs A' - A'' des erfindungsgemäßen Windkreisels nach Fig. 21. Der Fig. 22 ist zu entnehmen, dass der Haltearm 2 ein Hohlprofil mit quadratischem Querschnitt bildet. Die Federstabverankerung 39 ist mit Hilfe einer Verschraubung 41 an dem Haltearm 2 befestigt. Der Federstab 40 ist in einer horizontalen Ebene oberhalb der Halterung 2 bewegbar. Er wird durch die U-förmigen Enden der Federstabverankerung 39 anschlagbegrenzt.

Wird auf das freie Ende des Federstabs 40 eine mechanische Kraft nach oben ausgeübt, so lässt sich der Federstab 40 bei einer Ausrichtung im Wesentlichen längs dem Haltearm 2 nach oben drücken und aus der Federstabverankerung 39 lösen. Eine Einrasterung des Federstabs 40 in die Federstabverankerung 39 ist in Fig. 23 dargestellt. Hier genügt ein einfaches Verschieben des Federstabes 40 über einen Schenkel eines U-förmigen Endes der Federstabverankerung 39 in Richtung des Haltearms 2. Ist der Federstab 40 im Wesentlichen in Richtung des Haltearms 2 ausgerichtet, so schnappt der Federstab 40 infolge seiner Federkraft wieder nach unten, so dass er wieder durch die U-förmigen Enden der Federstabverankerung 39 anschlagbegrenzt wird.

Die Fig. 24 bis 27 demonstrieren die Ausrichtung des Segels im Wind und die daraus resultierende Antriebsbewegung sowie die Auslösung der Sturmsicherung.

Fig. 24 zeigt eine Detailansicht des Windkreisels nach Fig. 21, wobei der Haltearm 2 in östlicher Richtung ausgerichtet ist. Ein Wind aus westlicher Richtung hat zur Folge, dass aus das Segel 7 ein Drehmoment auf die Drehachse 8' entgegen dem Uhrzeigersinn ausgeübt wird. Der Federstab 40 wird von dem in südlicher Richtung ausgerichteten Ende der Federstabverankerung 39 anschlagbegrenzt. Je nach Windstärke erfolgt eine mehr oder weniger starke Verbiegung des Federstabs 40, welche in der Fig. 24 ebenfalls schematisch dargestellt ist. Aufgrund des Windes (Windrichtung 42), dessen Stärke durch die Dicke des Pfeils 42 gekennzeichnet ist, erfolgt eine Antriebsbewegung des Haltearms 2 und damit des Windkreisels entgegen dem Uhrzeigersinn.

In der Fig. 25 ist dargestellt, wie sich das Segel 7 ausrichtet, wenn der Wind aus östlicher Richtung (Windrichtung 42) erfolgt. Das Segel richtet sich im Beispiel im Wesentlichen in nordnordöstlicher Richtung aus. Der Federstab 40 wird durch das in nördlicher Richtung ausgerichtete U-förmige Ende der Federstabverankerung 39 anschlagbegrenzt. Die Vortriebskraft 26 auf den Haltearm 2 erfolgt wiederum in nördlicher Richtung, so dass eine Antriebsbewegung des Windkreisels wiederum entgegen dem Uhrzeigersinn erfolgt.

Fig. 26 zeigt die Ausrichtung des Segels 7 bei Wind aus nördlicher Richtung. Das Segel 7 richtet sich hier im Wesentlichen nach Süden aus, so dass der Federstab 40 in westliche Richtung zeigt. Hier erfolgt weder eine Anschlagbegrenzung des Federstabs 40 noch eine Antriebsbewegung des Windkreisels.

Die Fig. 27 zeigt eine Anordnung des Windkreisels zum Wind analog der in Fig. 24 dargestellten Weise. Die Stärke des Windes, welche durch die Dicke des Pfeils 42 repräsentiert ist, ist jedoch wesentlich größer. Ein solcher Sturm führt dazu, dass sich das Segel bei gleicher Ausrichtung des Haltearms 2 in südöstlicher Richtung ausrichtet. Dadurch wird der Federstab 40 viel stärker verbogen. Beim Überschreiten einer gewissen Windstärke wird der Federstab 40 dabei so weit verbogen, dass das mit Hilfe der Federstabverankerung 39 anschlagbegrenzte Ende sich aus dieser Verankerung befreit und die sogenannte Sturmsicherung auslöst. Die Auslösung der Sturmsi cherung ist in der Figur mit Hilfe eines Pfeils mit dem Bezugszeichen 43 gekennzeichnet. Nach Auslösung der Sturmsicherung nimmt der Federstab 40 mit dem Bezugszeichen 40' gekennzeichnete Stellung ein. Das Segel 7 ist nun im Wesentlichen frei bewegbar.

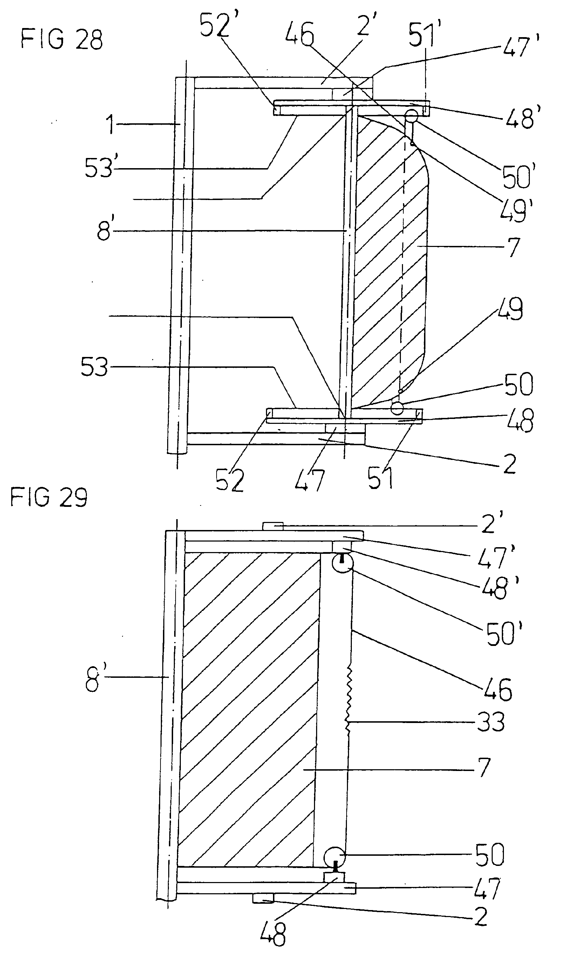

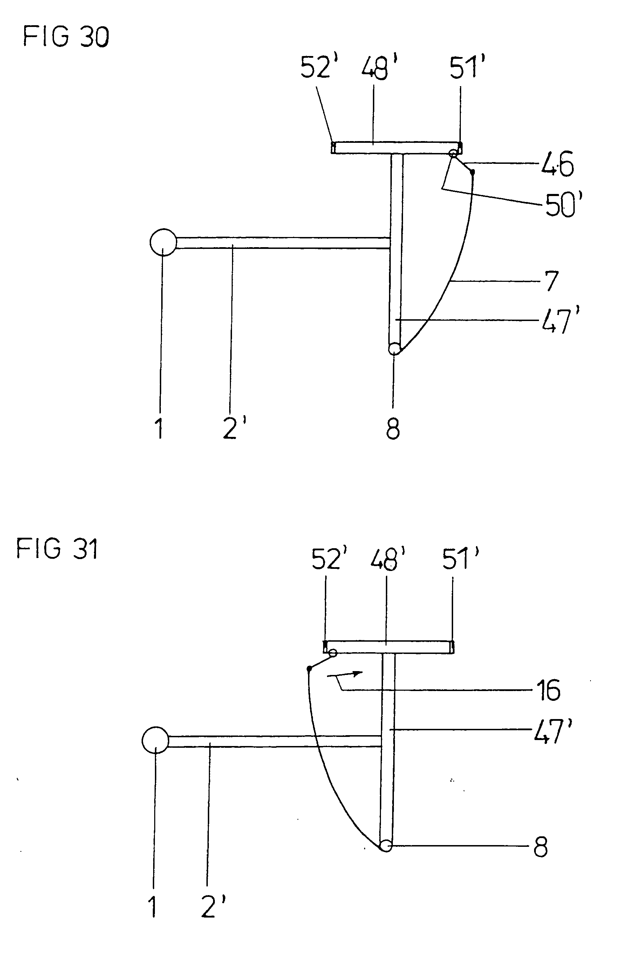

Die Fig. 28 bis 31 zeigen eine weitere Ausführungsform eines erfindungsgemäßen Windkreisels. Die Fig. 28 zeigt eine Ansicht des Windkreisels von vorn, die Fig. 29 eine Seitenansicht von rechts auf den erfindungsgemäßen Windkreisel nach Fig. 28. Die Fig. 30 und 31 zeigen eine Draufsicht von oben auf den erfindungsgemäßen Windkreisel nach Fig. 28, wobei in Fig. 30 das Segel 7 in Segelstellung rechts dargestellt ist, während in Fig. 31 das Segel 7 in Segelstellung links dargestellt ist.

Wie den Zeichnungen zu entnehmen ist, besteht der Windkreisel im Beispiel aus einem in vertikaler Richtung angeordneten Mast 1, an welchen in vertikaler Richtung beabstandet parallel in horizontaler Richtung verlaufende untere und obere Haltearme 2 und 2' angeordnet sind. An den Enden dieser unteren md oberen Haltearme 2 und 2' sind zwei ebenfalls in horizontaler Richtung verlaufende untere und obere Stangen 47 und 47' angeordnet. Die Fixierung zu der unteren und oberen Stange 47 und 47' an den jeweiligen Haltearmen 2 und 2' befindet sich etwa in der Mitte der unteren und oberen Stange 47 und 47', wobei die Haltearme 2 und 2' senkrecht auf den Stangen 47 und 47' stehen. An dem einen Ende der oberen und unteren Stangen 47' und 47 befinden sich die eine Schwenkachse 8' bildenden Segellagerungen 8 für das Segel 7.

An den Endseiten der unteren und oberen Stangen 47 und 47' befinden sich jeweils eine mittig fixierte untere und obere Stange 48 und 48'. An den jeweiligen äusseren Enden dieser oberen und unteren Stangen 48' und 48 befinden sich Befestigungseinrichtungen, zwischen denen jeweils ein Draht 53 bzw. 53' gespannt ist. Aufgrund der Funktionsweise der Befestigungseinrichtungen werden diese als obere/untere, linke/rechte Anschläge bezeichnet, welche in der Zeichnung mit den Bezugszeichen 51, 51', 52, 52' versehen sind.

Die oberen und unteren Drähte 53' und 53 sind zur Führung zweier ösenförmig ausgebildeter oberer und unterer Rollen 50' und 50 vorgesehen. Einerseits erfüllen diese Rollen dieselbe Funktion wie die Rollen 34, 34', 34'' und 34''' der Einrollvorrichtung zur Sturmsicherung 18. Desweiteren ermöglicht es die ösenförmige Ausbildung der oberen und unteren Rollen 50' und 50, dass das Segel 7 bei Wende und Halse zwischen den jeweiligen Anschlägen 51, 51', 52 und 52' hin und her bewegbar ist.

Die Verschwenkbarkeit des Segels 7 ist den Fig. 30 und 31 mit Hilfe eines mit der Bezugsziffer 16 gekennzeichneten Pfeiles dargestellt. Im Hinblick auf die Funktionsweise der Segeleinrollvorrichtung zur Sturmsicherung sei auf die Figurenbeschreibung zur Fig. 20 hingewiesen.

Die weiteren für die Funktion der Einrollvorrichtung 18 notwendigen Funktionsbestandteile sind mit den gleichen Bezugsziffern versehen wie die gemäß der Fig. 20.

### Bezugszeichenliste

- 1/1'': Mast/Maststumpf
- 1': Drehachse
- 2/2': unterer/oberer Haltearm
- 3/3': untere/obere Stange (beweglich gelagert)
- 4/4'/4": Stange
- 5: Mastlagerung
- 6: Mastfuß
- 7/7'/7'': Segel (Segelstellung)
- 8/8': Segellagerung/Schwenkachse
- 9: Schot
- 10: Segelhalterung
- 11: Generator
- 12: Drehrichtung des Windkreisels
- 13: Windrichtung
- 14: Halse
- 15: Wende
- 16: Verschwenkbarkeit
- 17: Lösepunkt
- 18: Einrollvorrichtung
- 19: Einrollen des Segels
- 20: Führungsdrähte
- 21: Kupplung
- 22: Getriebe
- 23: Seilzug
- 24: kreisförmige Scheibe
- 25: Winkelbereich
- 26: Vortriebskraft
- 27/27'/27": Bahnkurve
- 28: Haltearm
- 29: Wandbefestigungsvorrichtung
- 30: Wand
- 31: motorischer Antrieb
- 32: Zahnriemen- oder Zahnradantrieb
- 33: Federzug oder Gummizug
- 34/34'/34''/34''': Rolle
- 35/35': unteres/oberes Winkelstück
- 36/36'/36'': Haken
- 37: Draht
- 38/38': untere/obere Lagerung
- 39: Federstabverankerung
- 40/40': Federstab
- 41: Verschraubung
- 42: Windrichtung
- 43: Auslösung der Sturmsicherung
- 44: Bewegungsrichtungen des Federstabs
- 45/45': untere/obere Öse
- 46/46': unterer/oberer Draht
- 47/47': untere/obere Stange
- 48/48': untere/obere Stange
- 50/50': untere/obere Rolle
- 51/51': unterer/oberer linker Anschlag
- 52/52': unterer/oberer rechter Anschlag
- 53/53': unterer/oberer Draht

## Patentansprüche

1. Windkreisel für Werbeträger in Form von wenigstens eines eine Werbebotschaft tragenden Segels (7),
das um eine Schwenkachse (8') um einen vorgegebenen Winkelbereich (25) verschwenkbar gehalten ist, wobei der Winkelbereich (25) so gewählt ist, dass zum Erzeugen einer Vortriebskraft (26) eine selbsttätige Ausrichtung des Segels (7) auf die Windrichtung (13) nach Art eines Segels eines Segelbootes möglich ist und
dass derart gelagert ist, dass es infolge der Vortriebskraft (26) auf einer geschlossenen Bahnkurve (27) umlaufend antreibbar ist, wobei die Bahnkurve eine Kreisbahn (27) ist, und die Kreisbahn (27) **dadurch** vorgegeben ist, dass ein drehbar gelagerter, koaxial zur Drehachse (1') angeordneter Mast (1) oder Maststumpf (1") mindestens eine Haltervorrichtung (2) aufweist, an der das Segel (7) radial beabstandet zu der Drehachse (1') angeordnet ist.

2. Windkreisel nach Anspruch 1,
**dadurch gekennzeichnet, dass** drei Segel (7) vorgesehen sind.

3. Windkreisel nach Anspruch 1 oder 2,
**dadurch gekennzeichnet, dass** die Schwenkachse (8') achsparallel zur Drehachse (1') angeordnet ist.

4. Windkreisel nach einem der Ansprüche 1 bis 3,
**dadurch gekennzeichnet, dass** die Haltevorrichtung wenigstens ein radial an dem Mast (1) oder dem Maststumpf (1'') angeordneter Haltearm (2, 2') ist.

5. Windkreisel nach Anspruch 4,
**dadurch gekennzeichnet, dass** die Haltevorrichtung zwei parallel verlaufende Haltearme (2, 2') sind.

6. Windkreisel nach einem der Ansprüche 1 bis 3,
**dadurch gekennzeichnet, dass** die Haltevorrichtung kreisförmige Scheiben (24) sind, durch deren Mittelpunkte die Drehachse (1') verläuft.

7. Windkreisel nach einem der Ansprüche 1 bis 6,
**dadurch gekennzeichnet, dass** dem Mast (1) oder dem Maststumpf (1'') eine Wandbefestigungsvorrichtung (29) zugeordnet ist.

8. Windkreisel nach Anspruch 5,
**dadurch gekennzeichnet, dass** an den Haltearmen (2, 2') winklig abstehende Segelhalterungen (10) angeordnet sind, welche an den Segeln (7) befestigte Schoten (9) halten.

9. Windkreisel nach einem der vorangegangenen Ansprüche,
**dadurch gekennzeichnet, dass** jedem Segel (7) mindestens ein Derstab (40) zugeordnet ist, welcher im Wesentlichen starr zur Segelfläche fixiert ist und dass der Haltevorrichtung (2) eine Federstabverankerung (39) zugeordnet ist, welche den Federstab (40) derart umfasst, dass der Federstab (40) in seinen beiden Bewegungsrichtungen (44) anschlagbegrenzt ist.

10. Windkreisel nach Anspruch 8,
**dadurch gekennzeichnet, dass** die Schoten (9) eine Feder- oder Gummizugvorrichtung aufweisen.

11. Windkreisel nach Anspruch 9 oder 10
**dadurch gekennzeichnet, dass** eine Sturmsicherung vorgesehen ist, die beim Überschreiten einer vorgegebenen Windstärke die Verbindung zwischen den Schoten (9) und den Segelhalterungen (10) löst, so dass die Segel (7) ohne Winddruck frei drehbar sind.

12. Windkreisel nach Anspruch 11,
**dadurch gekennzeichnet, dass** die Auslösung der Sturmsicherung mittels eines Federzugs erfolgt.

13. Windkreisel nach Anspruch 11,
**dadurch gekennzeichnet, dass** die Auslösung der Sturmsicherung mittels eines elektrischen Windmessers erfolgt.

14. Windkreisel nach Anspruch 13,
**dadurch gekennzeichnet, dass** beim Unterschreiben einer5 vorgegebenen Windstärke die Verbindung zwischen den Schoten (9) und den Segelhalterungen (10) wiederherstellbar ist.

15. Windkreisel nach Anspruch 9,
**dadurch gekennzeichnet, dass** der Dederstab (40) als Sturmsicherung ausgebildet ist in der Weise, dass beim Überschreiten einer vorgegebenen Windstärke der Federstab (40) so stark geboten wird, dass die Federstabverankerung (39) den Federstab (40) freigibt und der Federstab (40) in seinen beiden Bewegungsrichtungen (44) nicht mehr anschlagbegrenzt ist.

16. Windkreisel nach Anspruch 15m
**dadurch gekennzeichnet, dass** beim Unterschreiten der vorgegebenen Windstärke der Federstab (40) wieder derart in die Federstabverankerung (39) einbringbar ist, dass diese den Federstab (40) wieder umfängt.

17. Windkreisel nach einem der vorangegangenen Ansprüche,
**dadurch gekennzeichnet, dass** eine rolladenartige Einrollvorrichtung (18) vorgesehen ist, so dass die Segel (7) rolladenartig einrollbar sind.

18. Windkreisel nach Anspruch 17,
**dadurch gekennzeichnet, dass** die rolladenartige Einrollvorrichtung (18) einen motorischen Antrieb (31) aufweist, so dass die Segel (7) mit Hilfe des motorischen Antriebs (31) einrollbar sind.

19. Windkreisel nach Anspruch 18,
**dadurch gekennzeichnet, dass** der Einrollvorrichtung (18) ein Rückstellorgan (33) zugeordnet ist, so dass das Einrollen entgegen dessen Rückstellkraft und das Ausrollen selbsttätig aufgrund dessen Rückstellkraft erfolgt.

20. Windkreisel nach einem der Ansprüche 13 bis 19,
**dadurch gekennzeichnet, dass** ein Signalgeber vorgesehen ist, der beim Überschreiten einer vorgegebenen Windstärke ein Signal zum Einrollen der Segel (7) gibt.

21. Windkreisel nach einem der Ansprüche 13 und 24,
**dadurch gekennzeichnet, dass** ein Signalgeber vorgesehen ist, der beim Unterschreiten einer vorgegebenen Windstärke ein Signal zum Ausrollen der Segel (7) gibt.

22. Windkreisel nach einem der vorangegangenen Ansprüche,
**dadurch gekennzeichnet**, das dem drehbar gelagerten Mast (1) oder den drehbar gelagerten Drehkörpern (1, 24) oder dem drehbar gelagerten Maststumpf (1'') ein elektrischer Generator (11) zugeordnet ist.

23. Windkreisel nach einem der vorangegangenen Ansprüche,
**dadurch gekennzeichnet, dass** der Windkreisel als Wasserkraftantrieb ausgebildet ist.

## Claims

1. Roundabout for advertising support in the form of at least one sail bearing an advertising message (7), which is fixed so as to be rotatable about an axis of rotation (8') through a given angle (25), in which the angle (25) is chosen such that, for the generation of a driving force (26) an automatic alignment of the sail (7) with the wind direction (13) as with a sail on a sailing boat is possible and is supported such that as a result of the driving force (26) can be rotated on a closed curve (27), in which the curve is a track (27), and the track (27) is defined such that a rotatably supported mast (1) or mast base (1") fitted coaxially with the rotating shaft (1') has at least one mounting (2), on which the sail (7) is fitted radially separated from the rotating shaft (1').

2. Roundabout in accordance with claim 1, ***characterized in that*** three sails (7) are provided.

3. Roundabout in accordance with claim 1 or claim 2, ***characterized in that*** the axis of rotation (8') is arranged with its axis parallel to the rotating shaft (1').

4. Roundabout in accordance with one of claims 1 to 3, ***characterized in that*** the mounting is at least one retaining arm (2, 2') arranged radially to the mast (1) or mast base (1").

5. Roundabout in accordance with claim 4, ***characterized in that*** the mounting consists of two retaining arms (2, 2') running parallel to one another.

6. Roundabout in accordance with one of claims 1 to 3, ***characterized in that*** the mounting consists of circular disks (24), through the centres of which runs the rotating shaft (1').

7. Roundabout in accordance with one of claims 1 to 6, ***characterized in that*** the mast (1) or mast base (1 ") is attached to a wall mounting (29).

8. Roundabout in accordance with claim 5, ***characterized in that*** the sail mountings (10) are fitted at an angle to the mounting arms (2, 2'), which hold cables (9) fastened to the sails (7).

9. Roundabout in accordance with any one of the preceding claims, ***characterized in that*** at least one sprung rod (40), which is fundamentally fixed rigidly to the surface of the sail, is attached to each sail (7) and that the mounting (2) is attached to a sprung rod anchorage (39), which surrounds the sprung rod (40) such that the sprung rod (40) is limited in both its directions of motion (44).

10. Roundabout in accordance with claim 8, ***characterized in that*** the cables (9) have a spring or rubber tensioning device.

11. Roundabout in accordance with claim 9 or 10, ***characterized in that*** a storm safety device is provided, which releases the connection between the cables (9) and the sail mountings (10) if a given wind speed is exceeded, so that the sail (7) can rotate freely without any wind pressure.

12. Roundabout in accordance with claim 11, ***characterized in that*** the release of the storm safety device is effected by means of a tension spring.

13. Roundabout in accordance with claim 11, ***characterized in that*** the release of the storm safety device is effected by means of an electric anemometer.

14. Roundabout in accordance with claim 13, ***characterized in that*** if the wind speed falls below a prescribed level, the connection between the cables (9) and the sail mountings (10) can be re-established.

15. Roundabout in accordance with claim 9, ***characterized in that*** the sprung rod (40) is formed as a storm safety device such that if the wind speed falls below a prescribed level, the sprung rod (40) is stressed so strongly that the sprung rod anchorage (39) releases the sprung rod (40) and the sprung rod (40) is no longer limited in both its directions of motion (44).

16. Roundabout in accordance with claim 15, ***characterized in that*** if the wind speed falls below a prescribed level, the sprung rod (40) can be replaced in the sprung rod anchorage (39) such that the latter again surrounds the sprung rod (40).

17. Roundabout in accordance with any one of the preceding claims, ***characterized in that*** a roller device (18) similar to a roller shutter is provided such that the sail (7) can be rolled like a roller shutter.

18. Roundabout in accordance with claim 17, ***characterized in that*** the roller device (18) similar to a roller shutter has a motorized drive (31) so that the sail (7) can be rolled using the motorized drive (31).

19. Roundabout in accordance with claim 18, ***characterized in that*** the roller device (18) is attached to a reset device (33) so that the rolling is effected against this reset force and the unrolling is effected automatically because of this reset force.

20. Roundabout in accordance with any one of claims 13 to 19, ***characterized in that*** a signal sensor is provided which, if the wind speed exceeds a prescribed level, gives a signal to roll in the sail (7).

21. Roundabout in accordance with either of claims 13 and 24, ***characterized in that*** a signal sensor is provided which, if the wind speed falls below a prescribed level, gives a signal to roll out the sail (7).

22. Roundabout in accordance with any one of the preceding claims, ***characterized in that*** an electric generator (11) is attached to the rotatably supported mast (1) or the rotatably supported rotating bodies (1, 24) or the rotatably supported mast base (1").

23. Roundabout in accordance with any one of the preceding claims, ***characterized in that*** the roundabout is designed as a water power drive.

## Revendications

1. Eolienne pour support publicitaire en forme d'au moins une voile (7) portant un message publicitaire et pivotante autour d'un axe de pivotement (8') dans une plage angulaire (25) prédéterminée, la plage angulaire (25) étant choisie pour permettre une orientation automatique de la voile (7) par rapport à la direction du vent (13) comme une voile d'un voilier pour générer une force propulsive (26), et qui est logée pour pouvoir être entraînée grâce à la force propulsive (26) suivant une trajectoire fermée (27), la trajectoire étant une trajectoire circulaire (27) définie en ce qu'un mât (1) ou un tronçon de mât (1") logé en rotation coaxialement à l'axe de rotation (1') présente au moins un dispositif de fixation (2) sur lequel la voile (7) est radialement écartée de l'axe de rotation (1').

2. Eolienne selon la revendication 1,
**caractérisée en ce que**
trois voiles (7) sont prévues.

3. Eolienne selon la revendication 1 ou 2,
**caractérisée en ce que**
l'axe de pivotement (8') est parallèle à l'axe de rotation (1').

4. Eolienne selon l'une quelconque des revendications 1 à 3,
**caractérisée en ce que**
le dispositif de fixation est au moins un bras de fixation (2, 2') disposé radialement au mât (1) et au tronçon de mât (1").

5. Eolienne selon la revendication 4,
**caractérisée en ce que**
le dispositif de fixation est composé de deux bras de fixation (2, 2') parallèles.

6. Eolienne selon l'une quelconque des revendications 1 à 3,
**caractérisée en ce que**
le dispositif de fixation est composé de deux disques circulaires (24) dont les points médians sont traversés par l'axe de rotation (1').

7. Eolienne selon l'une quelconque des revendications 1 à 6,
**caractérisée en que** qu'
un dispositif de fixation mural (29) est associé au mât (1) ou au tronçon de mât (1").

8. Eolienne selon la revendication 5,
**caractérisée en ce que**
des supports de voile (10) angulaires qui maintiennent des cosses (9) fixées aux voiles (7) sont disposés sur les bras de fixation (2, 2').

9. Eolienne selon l'une quelconque des revendications précédentes,
**caractérisée en ce qu'**
au moins une barre de ressort (40) fixée essentiellement de façon rigide par rapport à la surface de la voile est associée à chaque voile (7), et un ancrage de barre élastique (39) associé au dispositif de fixation (2) entoure la barre élastique (40) pour limiter en butées le débattement de la barre (40) dans ses deux directions de mouvement (44).

10. Eolienne selon la revendication 8,
**caractérisée en ce que**
les cosses (9) présentent un dispositif à ressort ou en caoutchouc.

11. Eolienne selon la revendication 9 ou 10,
**caractérisée en ce que**
lors d'un dépassement d'une force de vent prédéterminée, une protection anti-tempéte desserre la liaison entre les cosses (9) et les fixations de voile (10) pour permettre aux voiles (7) une rotation libre sans pression de vent.

12. Eolienne selon la revendication 11,
**caractérisée en ce que**
le déclenchement de la protection anti-tempête s'effectue au moyen d'une traction de ressort.

13. Eolienne selon la revendication 11,
**caractérisée en ce que**
le déclenchement de la protection anti-tempête s'effectue au moyen d'un anémomètre électrique.

14. Eolienne selon la revendication 13,
**caractérisée en ce qu'**
en absence d'une force de vent prédéterminée, on peut rétablir la liaison entre les cosses (9) et les fixations de voile (10).

15. Eolienne selon la revendication 9,
**caractérisée en ce que**
la barre de ressort (40) est configurée comme protection anti-tempête de sorte que, lors d'un dépassement d'une force de vent prédéterminée, la barre de ressort (40) soit déformée pour que l'ancrage de la barre de ressort (39) libère la barre de ressort (40) afin que celle-ci ne soit plus limitée par des butées dans ses deux directions de mouvement (44).

16. Eolienne selon la revendication 15,
**caractérisée en ce que**
lors d'un passage en dessous de la force de vent prédéterminée, la barre de ressort (40) peut être ramenée dans l'ancrage de la barre de ressort (39) de sorte que celui-ci entoure à nouveau la barre de ressort (40).

17. Eolienne selon l'une quelconque des revendications précédentes,
**caractérisée en ce qu'**
un dispositif d'enroulement (18) en forme de volet est prévu pour pouvoir enrouler les voiles (7).

18. Eolienne selon la revendication 17,
**caractérisée en ce que**
le dispositif d'enroulement (18) en forme de volet présente un entraînement motorisé (31) pour permettre l'enroulement des voiles (7) à l'aide de l'entraînement motorisé (31).

19. Eolienne selon la revendication 18,
**caractérisée en ce qu'**
un organe de rappel (33) est associé au dispositif d'enroulement (18) pour que l'enroulement s'effectue à l'encontre de la force de rappel de l'organe alors que le déroulement se fait automatiquement en raison de la force de rappel.

20. Eolienne selon l'une quelconque des revendications 13 à 19,
**caractérisée en ce qu'**
un générateur de signaux émet un signal pour enrouler les voiles (7) lors d'un dépassement d'une force de vent prédéterminée.

21. Eolienne selon l'une quelconque des revendications 13 et 24,
**caractérisée en ce qu'**
un générateur de signaux émet un signal pour dérouler les voiles (7) en l'absence d'une force de vent prédéterminée.

22. Eolienne selon l'une quelconque des revendications précédentes,
**caractérisée en ce qu'**
un générateur électrique (11) est associé au mât (1) rotatif ou aux corps de rotation (1, 24) rotatifs ou au tronçon de mât (1") rotatif.

23. Eolienne selon l'une quelconque des revendications précédentes,
**caractérisée en ce que**
l'éolienne présente la forme d'un entraînement hydraulique.
